# EUROPÄISCHE PATENTSCHRIFT

(11) **EP 2 446 153 B1**
(45) Veröffentlichungstag und Bekanntmachung des Hinweises auf die Patenterteilung: **05.10.2016**
(21) Anmeldenummer: 10720781.3
(22) Anmeldetag: 25.05.2010
(51) Int. Cl.: F15B 20/00

(54) **ANSTEUERSCHALTUNG FÜR EINEN PNEUMATISCHEN ODER HYDRAULISCHEN AKTUATOR**
DRIVE CIRCUIT FOR A PNEUMATIC OR HYDRAULIC ACTUATOR
CIRCUIT D'ACTIONNEMENT POUR UN ACTIONNEUR PNEUMATIQUE OU HYDRAULIQUE

(30) Priorität: 22.06.2009 DE 102009027070
(43) Veröffentlichungstag der Anmeldung: 02.05.2012
(73) Patentinhaber: ZF Friedrichshafen AG, 88046 Friedrichshafen (DE)
(72) Erfinder: VETTER, Manfred, 88048 Friedrichshafen (DE); SCHWARZ, Josef, 88045 Friedrichshafen (DE)
(86) Internationale Anmeldenummer: PCT/EP2010/057166
(87) Internationale Veröffentlichungsnummer: WO 2010/149446

(56) Entgegenhaltungen:
- WO-A1-96/25612
- DE-A1-102006 008 575
- DE-A1-102007 018 174
- DE-B4- 19 964 419
- GB-A- 2 191 875
- US-A1- 2009 062 976

## Beschreibung

Die Erfindung betrifft eine Ansteuerschaltung für einen pneumatischen oder hydraulischen Aktuator gemäß dem Obergriff des Anspruchs 1.

In mechatronischen Aggregaten oder Systemen für insbesondere Getriebe von Kraftfahrzeugen werden meist hydraulische oder pneumatische Aktuatoren verwendet. Solche hydraulische oder pneumatische Aktuatoren können zum Beispiel als hydraulische oder pneumatische Zylinder ausgebildet sein, die eine definierte Stellposition einnehmen bzw. zwischen definierten Stellpositionen überführt werden sollen. Zur Ansteuerung solcher pneumatischer oder hydraulischer Aktuatoren dienen Ansteuerschaltungen.

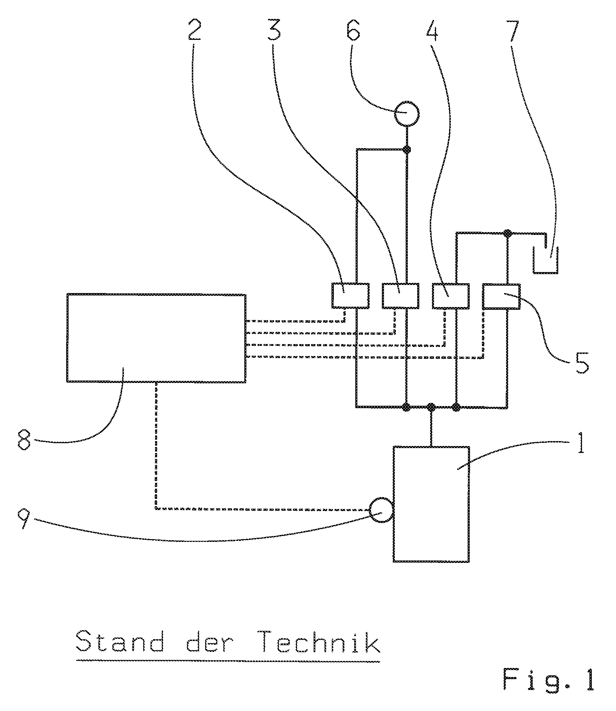

Fig. 1 zeigt eine aus dem Stand der Technik bekannte Ansteuerschaltung für einen pneumatischen oder hydraulischen Aktuator 1, wobei die Ansteuerschaltung mehrere Ventile umfasst. In Fig. 1 umfasst die Ansteuerschaltung vier Ventile 2, 3, 4 und 5, wobei abhängig von einer Schaltstellung der Ventile ein pneumatisches oder hydraulisches Steuermedium dem pneumatischen oder hydraulischen Aktuator 1 zugeführt werden kann. In Fig. 1 kann über die Ventile 2 und 3 dem Aktuator 1 mithilfe einer Pumpe 6 hydraulisches oder pneumatisches Medium zugeführt werden. Über die Ventile 4 und 5 kann das hydraulische oder pneumatische Steuermedium vom Aktuator 1 abgeführt und einem Sammelbehälter 7 zugeführt werden. Die Schaltstellung der Ventile 2, 3, 4 und 5 bestimmt, ob das pneumatische oder hydraulische Steuermedium dem Aktuator 1 zugeführt oder von demselben abgeführt wird. Die in Fig. 1 gezeigte, aus dem Stand der Technik bekannte Ansteuerschaltung verfügt zusätzlich zu den Ventilen 2, 3, 4 und 5 weiterhin über eine Elektronikeinheit 8. Mithilfe der Elektronikeinheit 8 können alle Ventile 2, 3, 4 und 5 angesteuert werden, um deren Schaltstellung zu bestimmen und so den pneumatischen oder hydraulischen Aktuator 1 in einer definierten Stellposition zu halten oder in eine definierte Stellposition zu überführen.

Im Bereich des Aktuators 1 sowie der Ventile 2, 3, 4 und 5 können sich konstruktionsbedingt Undichtigkeiten ausbilden. Aus dem Stand der Technik ist es bereits bekannt, dem Aktuator 1 einen Sensor 9 zuzuordnen, um eine undichtigkeitsabhängige Änderung der Stellposition des Aktuators 1 zu detektieren und der Elektronikeinheit 8 einen entsprechenden Messwert bereitzustellen. Über die Elektronikeinheit 8 können die Ventile 2, 3, 4 und 5 dann so angesteuert werden, dass die detektierte, undichtigkeitsabhängige Änderung der Stellposition des Aktuators 1 kompensiert wird.

Bei Ausfall der Elektronikeinheit 8 muss der pneumatische oder hydraulische Aktuator 1 eine definierte Stellposition einnehmen. Dann, wenn bei der aus dem Stand der Technik bekannten, in Fig. 1 gezeigten Ansteuereinheit die Elektronikeinheit 8 ausfällt und weiterhin am Aktuator 1 und/oder den Ventilen 2 bis 5 eine Undichtigkeit auftritt, kann diese Forderung nicht mehr erfüllt werden, so dass dann der Aktuator 1 die definierte Stellposition nicht beibehalten oder einnehmen kann. Dies ist von Nachteil.

Aus der DE 103 47 073 A1 ist ein Antriebsstrang eines Kraftfahrzeugs bekannt, bei welchem unabhängig von einer elektrischen Energieversorgung und/oder einer ordnungsgemäßen Funktion einer elektrischen Steuer-/Regelschaltung für einen Notbetriebszeitraum ein ausreichender Druck für einen Notbetrieb des Kraftfahrzeugs bereitgestellt werden kann.

Aus der DE 10 2006 008 575 A1 ist eine Getriebevorrichtung bekannt, mit zwei Controllern zur Ansteuerung von Ventilen der Getriebevorrichtung. Die beiden Controller erzeugen unabhängig voneinander Ansteuerungssignale die einer Zugriffskontrolleinrichtung zugeführt werden, welche die Signale auf Plausibilität prüft und den Ventilen zuführt. Beim Ausfall einer der Controller werden der Zugriffskontrolleinrichtung von dem jeweils anderen der Controller einem Fail-Safe-Zustand entsprechende Ansteuersignale für die Ventile zugeführt.

Hiervon ausgehend liegt der vorliegenden Erfindung die Aufgabe zu Grunde, eine neuartige Ansteuerschaltung für einen pneumatischen oder hydraulischen Aktuator zu schaffen, mit der auch bei Ausfall der Elektronikeinheit gewährleistet werden kann, dass der Aktuator eine definierte Stellposition beibehält oder einnimmt.

Diese Aufgabe wird durch eine Ansteuerschaltung gemäß Anspruch 1 gelöst. Erfindungsgemäß umfasst die Ansteuerschaltung eine Zusatzelektronikeinheit, die bei Ausfall der Elektronikeinheit mindestens ein Ventil derart ansteuert, dass der Aktuator eine definierte Stellposition beibehält oder einnimmt.

Die erfindungsgemäße Ansteuerschaltung umfasst eine Zusatzelektronikeinheit, die zur Elektronikeinheit eine in Teilen redundante Funktionalität bereitstellt, um so bei Ausfall der Elektronikeinheit zu gewährleisten, dass der Aktuator eine definierte Stellposition beibehält oder einnimmt. Die Zusatzelektronikeinheit übernimmt bei Ausfall der Elektronikeinheit als redundante Baugruppe die Aufgabe einer Kompensation einer möglichen Undichtigkeit, um so zu verhindern, dass der Aktuator bei Ausfall der Elektronikeinheit eine nicht definierte, unsichere Stellposition einnimmt und um so einen kritischen Systemzustand zu verhindern.

Erfindungsgemäß ist das Ventil, welches bei Ausfall der Elektronikeinheit von der Zusatzelektronikeinheit angesteuert wird, der Zusatzelektronikeinheit derart zugeordnet, dass
- bei aktiver Elektronikeinheit die Elektronikeinheit dieses Ventil über die Zusatzelektronikeinheit derart ansteuert, dass Befehle der Zusatzelektronikeinheit überschrieben werden und
- bei Ausfall der Elektronikeinheit die Zusatzelektronikeinheit dieses Ventil ansteuert.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: ein Blockschaltbild einer aus dem Stand der Technik bekannten Ansteuerschaltung für einen pneumatischen oder hydraulischen Aktuator; und
- Fig. 2: ein Blockschaltbild einer erfindungsgemäßen Ansteuerschaltung für einen pneumatischen oder hydraulischen Aktuator.

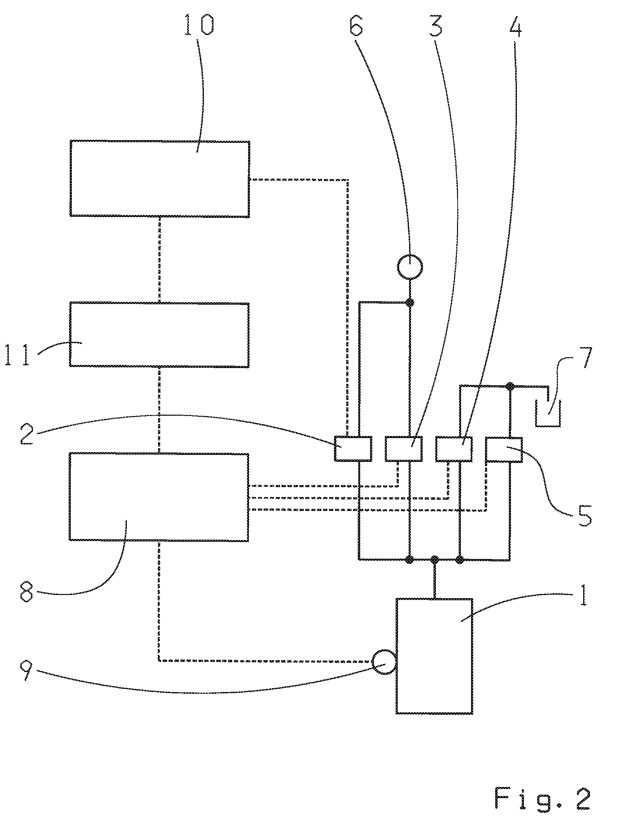

Fig. 2 zeigt ein Blockschaltbild einer erfindungsgemäßen Ansteuerschaltung für einen pneumatischen oder hydraulischen Aktuator 1, wobei zur Vermeidung unnötiger Wiederholungen in Fig. 1 und 2 für gleiche Baugruppen gleiche Bezugsziffern verwendet werden.

Die erfindungsgemäße Ansteuerschaltung gemäß Fig. 2 umfasst zusätzlich zur Elektronikeinheit 8 eine Zusatzelektronikeinheit 10. Bei Ausfall der Elektronikeinheit 8 steuert die Zusatzelektronikeinheit 10 mindestens ein Ventil, nämlich im Ausführungsbeispiel der Fig. 2 das Ventil 2, derart an, dass der Aktuator 1 eine definierte Stellposition beibehält oder einnimmt. Bei Ausfall der Elektronikeinheit 8 kompensiert demnach die Zusatzelektronikeinheit 10 eine im Bereich des Aktuators 1 und/oder eine im Bereich der Ventile 2 bis 5 auftretende Undichtigkeit derart, dass die Zusatzelektronikeinheit 10 abhängig vom Messwert des Sensors 9, der eine undichtigkeitsabhängige Änderung der Stellposition des Aktuators 1 detektiert, das Ventil 2 derart ansteuert, dass die undichtigkeitsabhängige Änderung der Stellposition des Aktuators 1 kompensiert wird.

Das oder jedes Ventil, im gezeigten Ausführungsbeispiel das Ventil 2, welches bei Ausfall der Elektronikeinheit 8 von der Zusatzelektronikeinheit 10 angesteuert ist, ist der Zusatzelektronikeinheit 10 zugeordnet, nämlich derart, dass bei aktiver Elektronikeinheit 8 die Elektronikeinheit 8 das Ventil 2 ansteuert, und dass bei inaktiver Elektronikeinheit 8 die Zusatzelektronikeinheit 10 das Ventil 2 ansteuert. Die Ventile 3 bis 5 sind im gezeigten Ausführungsbeispiel ausschließlich von der Elektronikeinheit 8 ansteuerbar. Bei Ausfall der Elektronikeinheit 8 kann also im gezeigten Ausführungsbeispiel ausschließlich das Ventil 2 über die der Zusatzelektronikeinheit 10 angesteuert werden.

Die Elektronikeinheit 8 und die Zusatzelektronikeinheit 10 verfügen über eine unabhängige, redundante Strom- bzw. Spannungsversorgung. Zumindest im Hinblick auf die oben genannte Kompensation einer Undichtigkeit stellt die Zusatzelektronikeinheit 10 eine zur Elektronikeinheit 8 redundante Funktionalität bereit, die bei Ausfall der Elektronikeinheit 8 insbesondere eine Sicherungsfunktion übernimmt, und zwar derart, dass bei Ausfall der Elektronikeinheit 8 der Aktuator 1 eine definierte Stellposition beibehält oder einnimmt.

Bei den Ventilen 2 und 3, über die dem Aktuator 1 jeweils ein pneumatisches oder hydraulisches Steuermedium zugeführt werden kann, handelt es sich um redundante Ventile. Ebenso handelt es sich bei den Ventilen 4 und 5 um redundante Ventil, über die jeweils vom Aktuator 1 pneumatisches oder hydraulisches Steuermedium abgeführt werden kann.

Bei den Ventilen 2 bis 5 handelt es sich vorzugsweise um Magnetventile, die bedingt durch eine elektrische Ansteuerung über die Elektronikeinheit 8 oder Zusatzelektronikeinheit 10 eine definierte Schaltstellung einnehmen und so entweder pneumatisches oder hydraulisches Steuermedium dem Aktuator 1 zuführen oder von demselben abführen.

Gemäß Fig. 2 ist nach einer vorteilhaften Weiterbildung der hier vorliegenden Erfindung zwischen der Elektronikeinheit 8 und der Zusatzelektronikeinheit 10 eine Entkopplungselektronikeinheit 11 geschaltet. Über die in Entkopplungselektronikeinheit 11 wird verhindert, dass sich bei Ausfall der Elektronikeinheit 8 die Elektronikeinheit 8 und die Zusatzelektronikeinheit 10 gegenseitig beeinflussen. Die Entkopplungselektronikeinheit 11 kann zum Beispiel mithilfe optoelektrischer Baugruppen realisiert sein.

Die erfindungsgemäße Ansteuerschaltung für einen pneumatischen oder hydraulischen Aktuator 1 verfügt demnach zusätzlich zur Elektronikeinheit 8, die auch als Hauptelektronikeinheit bezeichnet werden kann, über eine Zusatzelektronikeinheit 10, die zumindest hinsichtlich der Kompensation einer Undichtigkeit zur Elektronikeinheit 8 eine Redundanz bereitstellt, und die so verhindert, dass der Aktuator 1 bei Ausfall der Elektronikeinheit 8 einen kritischen Zustand einnimmt.

Im Normalfall ist die Elektronikeinheit 8 aktiv und steuert alle Ventile 2 bis 5 an. Beim Ausfall der Elektronikeinheit 8 übernimmt die Zusatzelektronikeinheit 10 die Ansteuerung mindestens eines der Ventil 2 bis 5, im gezeigten Ausführungsbeispiel die Ansteuerung des Ventils 2, um so im Sinne einer Redundanz bei Ausfall der Elektronikeinheit 8 die Kompensation einer Undichtigkeit bereitzustellen.

Dann, wenn die Elektronikeinheit 8 aktiv ist, wird das Ventil 2 über die Entkopplungselektronikeinheit 11 angesteuert, nämlich derart, dass Befehle der Zusatzelektronikeinheit 10 überschrieben werden. Bei Ausfall der Elektronikeinheit 8 übernimmt die Zusatzelektronikeinheit 10 die Ansteuerung des Ventils 2, wobei die Entkopplungselektronikeinheit 11 verhindert, dass die ausgefallene Elektronikeinheit 8 die Funktion der Zusatzelektronikeinheit 10 beeinflusst.

### Bezugszeichen

- 1: Aktuator
- 2: Ventil
- 3: Ventil
- 4: Ventil
- 5: Ventil
- 6: Pumpe
- 7: Sammelbehälter
- 8: Elektronikeinheit
- 9: Sensor
- 10: Zusatzelektronikeinheit
- 11: Entkopplungselektronikeinheit

## Patentansprüche

1. Ansteuerschaltung für einen pneumatischen oder hydraulischen Aktuator (1), insbesondere einen pneumatischen oder hydraulischen Stellzylinder eines Fahrzeuggetriebes,
mit mehreren Ventilen (2, 3, 4, 5), wobei abhängig von einer Schaltstellung der Ventile (2, 3, 4, 5) ein pneumatisches oder hydraulisches Steuermedium dem pneumatischen oder hydraulischen Aktuator (1) zuführbar bzw. von demselben abführbar ist, und
mit einer Elektronikeinheit (8), mit Hilfe derer alle Ventile (2, 3, 4, 5) ansteuerbar sind, um deren Schaltstellung zu bestimmen und den Aktuator (1) in einer definierten Stellposition zu halten oder in eine definierten Stellposition zu überführen, und
mit einer Zusatzelektronikeinheit (10), die bei Ausfall der Elektronikeinheit (8) mindestens eines der Ventile (2) derart ansteuert, dass der Aktuator (1) eine definierte Stellposition beibehält oder einnimmt
**dadurch gekennzeichnet, dass**
das Ventil (2), welches bei Ausfall der Elektronikeinheit (8) von der Zusatzelektronikeinheit (10) angesteuert ist, der Zusatzelektronikeinheit (10) derart zugeordnet ist, dass
• bei aktiver Elektronikeinheit (8) die Elektronikeinheit (8) dieses Ventil (2) über die Zusatzelektronikeinheit (10) derart ansteuert, dass Befehle der Zusatzelektronikeinheit (10) überschrieben werden und
• bei Ausfall der Elektronikeinheit (8) die Zusatzelektronikeinheit (10) dieses Ventil (2) ansteuert.

2. Ansteuerschaltung nach Anspruch 1, **dadurch gekennzeichnet, dass** die Elektronikeinheit (8) und die Zusatzelektronikeinheit (10) eine unabhängige Strom- bzw. Spannungsversorgung aufweisen.

3. Ansteuerschaltung nach einem der Ansprüche 1 bis 2, **dadurch gekennzeichnet, dass** zwischen der Elektronikeinheit (8) und der Zusatzelektronikeinheit (10) eine Entkopplungselektronikeinheit (11) geschaltet ist, die bei Ausfall der Elektronikeinheit (8) eine gegenseitige Beeinflussung von Elektronikeinheit (8) und Zusatzelektronikeinheit (10) verhindert.

4. Ansteuerschaltung nach Anspruch 3, **dadurch gekennzeichnet, dass** das Ventil (2), welches bei Ausfall der Elektronikeinheit (8) von der Zusatzelektronikeinheit (10) angesteuert ist, bei aktiver Elektronikeinheit (8) über die Entkopplungselektronikeinheit (11) und über die Zusatzelektronikeinheit (10) derart angesteuert wird, dass Befehle der Zusatzelektronikeinheit (10) überschrieben werden.

## Claims

1. Drive circuit for a pneumatic or hydraulic actuator (1), in particular a pneumatic or hydraulic actuating cylinder of a vehicle transmission, having a plurality of valves (2, 3, 4, 5), wherein a pneumatic or hydraulic control medium can be fed to the pneumatic or hydraulic actuator (1), or discharged therefrom, as function of a switched position of the valves (2, 3, 4, 5), and
having an electronic unit (8) by means of which all the valves (2, 3, 4, 5) can be actuated in order to determine their switched position and in order to hold the actuator (1) in a defined actuating position or to move it into a defined actuating position, and
having an additional electronic unit (10) which, in the event of failure of the electronic unit (8), actuates at least one of the valves (2) in such a way that the actuator (1) maintains or assumes a defined actuating position, **characterized in that**
the valve (2) which is actuated by the additional electronic unit (10) in the event of failure of the electronic unit (8) is assigned to the additional electronic unit (10) in such a way that
• when the electronic unit (8) is active, the electronic unit (8) actuates this valve (2) via the additional electronic unit (10) in such a way that commands of the additional electronic unit (10) are overwritten, and
• in the event of failure of the electronic unit (8) the additional electronic unit (10) actuates this valve (2).

2. Drive circuit according to Claim 1, **characterized in that** the electronic unit (8) and the additional electronic unit (10) have an independent power supply and voltage supply.

3. Drive circuit according to one of Claims 1 to 2, **characterized in that** a decoupling electronic unit (11), which in the event of failure of the electronic unit (8) prevents the electronic unit (8) and additional electronic unit (10) from influencing one another, is connected between the electronic unit (8) and the additional electronic unit (10).

4. Drive circuit according to Claim 3, **characterized in that** the valve (2) which is actuated by the electronic unit (10) in the event of failure of the electronic unit (8) is actuated, in the case of an active electronic unit (8), via the decoupling electronic unit (11) and via the additional electronic unit (10), in such a way that commands of the additional electronic unit (10) are overwritten.

## Revendications

1. Circuit d'attaque destiné à un actionneur pneumatique ou hydraulique (1), en particulier à un vérin de réglage pneumatique ou hydraulique d'une transmission de véhicule,
comportant de multiples soupapes (2, 3, 4, 5), dans lequel, en fonction d'une position de commutation des soupapes (2, 3, 4, 5), un agent de commande pneumatique ou hydraulique peut être délivré à l'actionneur pneumatique ou hydraulique (1) ou peut en être prélevé, et
comportant une unité électronique (8) à l'aide de laquelle toutes les soupapes (2, 3, 4, 5) peuvent être attaquées, afin de déterminer leur position de commutation et de maintenir l'actionneur (1) à une position de réglage définie ou de le faire passer à une position de réglage définie, et
comportant une unité électronique supplémentaire (10) qui, en cas de défaillance de l'unité électronique (8), attaque au moins l'une des soupapes (2) de manière à ce que l'actionneur (1) conserve ou adopte une position de réglage définie,
**caractérisé en ce que**
la soupape (2) qui, en cas de défaillance de l'unité électronique (8), est attaquée par l'unité électronique supplémentaire (10), est associée à l'unité électronique supplémentaire (10) de manière à ce que,
- lorsque l'unité électronique (8) est active, l'unité électronique (8) attaque ladite soupape (2) par l'intermédiaire de l'unité électronique supplémentaire (10) de manière à ce que des instructions de l'unité électronique supplémentaire (10) soient écrasées et que,
- en cas de défaillance de l'unité électronique (8), l'unité électronique supplémentaire (10) attaque ladite soupape (2).

2. Circuit d'attaque selon la revendication 1, **caractérisé en ce que** l'unité électronique (8) et l'unité électronique supplémentaire (10) comportent une alimentation en courant ou en tension indépendante.

3. Circuit d'attaque selon l'une quelconque des revendications 1 à 2, **caractérisé en ce qu'**une unité électronique de découplage (11) est montée entre l'unité électronique (8) et l'unité électronique supplémentaire (10), celle-ci réduisant, en cas de défaillance de l'unité électronique (8), une influence mutuelle de l'unité électronique (8) et de l'unité électronique supplémentaire (10).

4. Circuit d'attaque selon la revendication 3, **caractérisé en ce que** la soupape (2) qui, en cas de défaillance de l'unité électronique (8), est attaquée par l'unité électronique supplémentaire (10), est attaquée par l'intermédiaire de l'unité électronique de découplage (11) et par l'intermédiaire de l'unité électronique supplémentaire (10) lorsque l'unité électronique (8) est active, de manière à ce que des instructions de l'unité électronique supplémentaire (10) soient écrasées.
